# FASCICULE DE BREVET EUROPEEN

(11) **EP 2 380 655 B1**
(45) Date de publication et mention de la délivrance du brevet: **27.03.2013**
(21) Numéro de dépôt: 11161412.9
(22) Date de dépôt: 07.04.2011
(51) Int. Cl.: B01F 13/04, B01F 11/00, B01F 15/00, B01F 7/04, B01F 7/00, A01K 5/00

(54) **Godet mélangeur et/ou distributeur et procédé de mélange**
Misch- und/oder Verteilkübel und Mischverfahren
Mixing and/or distributing bucket and mixing method

(30) Priorité: 20.04.2010 FR 1053000
(43) Date de publication de la demande: 26.10.2011
(73) Titulaire: Etablissements Emily, 29800 Treflevenez (FR)
(72) Inventeur: Miossec, Arnaud, 29420, MESPAUL (FR)
(74) Mandataire: Maillet, Alain

(56) Documents cités:
- EP-A2- 0 724 940
- FR-A1- 2 759 621
- FR-A1- 2 819 146
- US-A- 5 491 914
- US-B1- 6 193 403

## Description

La présente invention concerne un godet destiné à charger des matières, les mélanger, et le cas échéant, les distribuer.

Un godet de mélange et/ou de distribution est constitué en général d'une benne comprenant une paroi frontale, une paroi dorsale, réunies par une paroi de fond, et réunies également par deux parois latérales. Une trappe de déchargement ferme ou dégage une ouverture pratiquée dans une paroi latérale pour que de la matière puisse être déchargée latéralement. En prévoyant une trappe fermant une ouverture dans chacune des parois latérales, on peut de la sorte déverser la matière indifféremment à gauche ou à droite du godet.

On connaît ainsi un godet, connue par exemple le godet décrit dans le document EP-A-1 790 780, breveté par le demandeur, incorporant dans son fond une vis sans fin. La paroi de fond de ce godet enveloppe la vis sans fin sur un arc de cercle dont l'angle est supérieur à 180°. En fonctionnement, de la matière est chargée dans le godet, puis est distribuée à un endroit voulu, en ouvrant une trappe correspondante et en faisant tourner la vis sans fin dans un sens de rotation de façon à ce qu'elle puisse faire sortir la matière au travers de l'ouverture ainsi dégagée. S'agissant d'un ensilage d'herbe incorporant de longues fibres, ce godet est efficace dans le sens où il évite tout bourrage. Cependant, on ne parvient pas facilement, dans ce godet dédié à la distribution, à mélanger une matière additionnelle avec l'ensilage, pratique qui est devenue courante désormais.

Pour mélanger de manière efficace au moins deux matières dans un godet, on peut adjoindre au godet, un mélangeur constitué d'un arbre placé longitudinalement au dessus de la vis sans fin, pour être entraîné à rotation, cet arbre supportant des pales radiales pour, en tournant, brasser les matières afin de les mélanger. L'adjonction de ce moyen spécifique accroît le coût de fabrication du godet. Par ailleurs, la matière prisonnière dans le filet hélicoïdal de la vis sans fin n'est pas mélangée et il subsiste parfois une zone de matière située de part et d'autre des pales radiales, et au-dessus de la vis sans fin, qui n'est pas non plus mélangée.

Pour mélanger des aliments secs destinés à la nourriture animale, tels que de l'orge et du soja, le demandeur a mis au point un godet dans lequel la vis sans fin incorpore deux spires hélicoïdales, l'une intérieure et l'autre extérieure, solidaires d'un arbre par l'intermédiaire de doigts radiaux, et de pas inverses. Pour mélanger, en particulier, des aliments dont l'un incorpore des fibres longues, telles que du foin, ce godet, dédié au mélange d'aliments secs, s'avère cependant moins performant.

On connaît ainsi des godets de mélange et de distribution, mais seule l'une de ces fonctions est réalisée de manière vraiment efficace.

Le demandeur a ainsi cherché une solution universelle pour mélanger et distribuer de manière très efficace tous types de matières.

A cet effet, est proposé un godet destiné à mélanger des matières, du type comprenant une benne délimitée par une paroi de fond, un organe monté à rotation le long de sa paroi de fond pour mélanger la matière dans la benne ; selon l'invention, le godet est pourvu d'un moyen de commande apte à inverser, de manière périodique et automatique, le sens de rotation dudit organe.

L'inversion régulière et automatique du sens de rotation de l'organe rotatif produit un mélange homogène et reproductible des matières contenues dans la benne. Celles-ci conservent leurs propriétés intrinsèques.

Selon une caractéristique additionnelle de l'invention, le moyen de commande comprend un temporisateur.

En fonctionnement, le temporisateur commande un distributeur hydraulique capable d'inverser le sens de rotation de l'organe de mélange.

Selon une caractéristique additionnelle de l'invention, l'organe rotatif comprend un arbre autour duquel sont montées des pales.

Cette structure de l'organe rotatif convient pour brasser la matière et la distribuer.

Selon une caractéristique additionnelle de l'invention, chaque pale comprend une paire d'ailes attenantes à une âme centrale solidaire de l'arbre.

Selon une caractéristique additionnelle de l'invention, la benne comporte des parois latérales et dont au moins une est traversée par une ouverture et la benne comporte une trappe de déchargement qui est montée de manière mobile contre cette paroi entre une position de fermeture de l'ouverture et une position de dégagement de ladite ouverture.

Selon une caractéristique additionnelle de l'invention, l'arbre est susceptible d'être entraîné à rotation au niveau d'au moins l'une de ses extrémités par l'intermédiaire d'un moteur.

Selon une caractéristique additionnelle de l'invention, ledit ou chaque moteur est fixé à l'intérieur d'un pot solidaire d'une paroi latérale.

Selon une caractéristique additionnelle de l'invention, au moins une extrémité de l'arbre est prolongée en direction d'une paroi latérale correspondante par l'intermédiaire d'un manchon qui coiffe le pot sans le toucher, au moins une pale étant fixée autour dudit manchon pour que celles-ci puissent travailler sur toute la largeur interne de la benne.

Selon une caractéristique additionnelle de l'invention, le moyen de commande comprend un capteur de pression placé dans le circuit d'alimentation dudit ou de chaque moteur.

Le signal de ce capteur est exploité pour commander l'inversion de sens de rotation du ou des moteurs.

Un procédé de mélange de matières dans une benne pourvue d'un organe rotatif de mélange situé le long de sa paroi de fond fait également partie de l'invention.

Selon une caractéristique du procédé, celui-ci consiste, pendant une phase de mélange, à inverser périodiquement, et de manière automatique, le sens de rotation dudit organe de manière à brasser les matières sans les dénaturer.

S'agissant de matières fragiles telles que des aliments pour animaux, on obtient un mélange parfaitement homogène et dont les constituants conservent leurs textures.

Grâce à l'automatisation des étapes de mélange du procédé, celui-ci est parfaitement reproductible. Il permet d'obtenir un meilleur mélange qu'un brassage mécanique mis en oeuvre manuellement.

Selon une caractéristique additionnelle de l'invention, le procédé consiste à faire tourner l'organe rotatif d'au moins un tour complet avant d'inverser son sens de rotation.

Selon une caractéristique additionnelle de l'invention, le procédé consiste, pendant une phase de distribution du mélange, à faire tourner l'organe rotatif dans un seul sens particulier.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente une vue en perspective d'un godet mélangeur et distributeur selon l'invention,
la Fig. 2 représente une vue en coupe transversale d'un godet mélangeur et distributeur selon l'invention,
la Fig. 3a représente une vue latérale d'un godet mélangeur et distributeur, dont une trappe de déchargement est orientée dans une position de fermeture selon l'invention,
la Fig. 3b représente une vue latérale d'un godet mélangeur et distributeur, dont une trappe de déchargement est orientée dans une position d'ouverture selon l'invention,
la Fig. 4 représente une vue de dessus d'un godet mélangeur et distributeur selon l'invention,
la Fig. 5 représente une vue en coupe longitudinale d'un godet mélangeur et distributeur selon l'invention,
la Fig. 6a représente une vue en perspective d'un organe de mélange et de distribution de la matière pour un godet selon l'invention,
la Fig. 6b représente une vue de face d'une pale constitutive d'un organe de mélange et de distribution selon l'invention,
la Fig. 6c représente une vue en extrémité d'une pale constitutive d'un organe de mélange et de distribution selon l'invention,
la Fig. 7a représente une vue de dessus schématique d'un godet mélangeur et distributeur pendant une première phase de son fonctionnement selon l'invention,
la Fig. 7b représente une vue de dessus schématique d'un godet mélangeur et distributeur pendant une seconde phase de son fonctionnement selon l'invention,
la Fig. 8 représente un schéma de raccordement des moteurs hydrauliques d'un godet mélangeur et distributeur selon l'invention,
la Fig. 9a représente une vue latérale d'une variante de réalisation d'un godet mélangeur et distributeur pourvu d'un bras de manoeuvre tourné dans une position de dégagement selon l'invention et,
la Fig. 9b représente une vue latérale d'une variante de réalisation d'un godet mélangeur et distributeur pourvu d'un bras de manoeuvre tourné dans une position de rabattement selon l'invention.

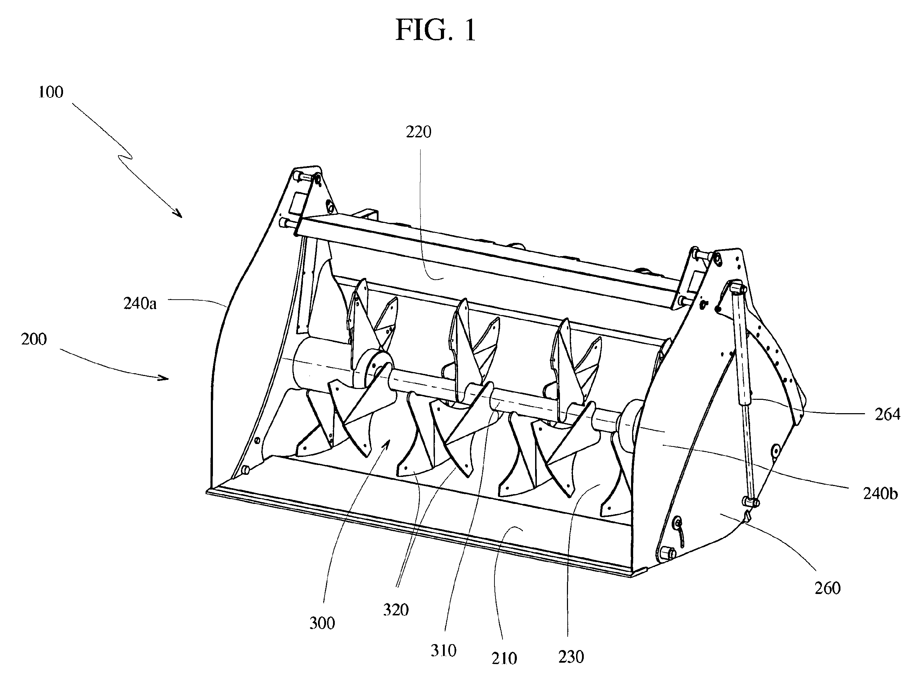

Le godet 100 présenté sur la Fig. 1 est destiné à être attelé à un engin porteur pour charger, par exemple depuis un tas ou par l'intermédiaire d'une trémie, une matière pour la distribuer en un emplacement particulier. Il peut encore avantageusement être utilisé pour mélanger plusieurs matières. Une application intéressante pour ce godet consiste à incorporer par exemple une matière fibreuse telle que du foin avec un ensilage de maïs pour élaborer un aliment pour des animaux.

Le godet 100 se compose d'une benne 200, d'un organe 300 de mélange et de distribution de la matière qu'elle est susceptible de contenir.

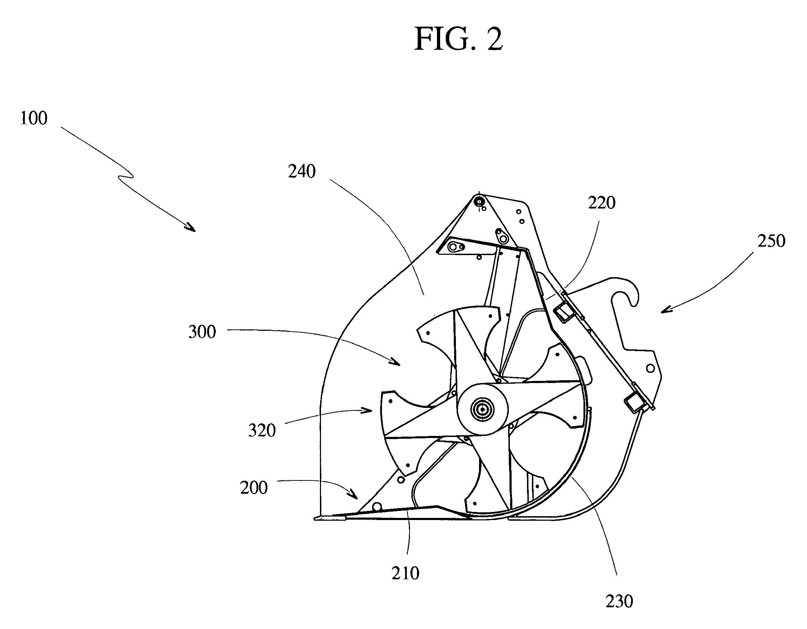

La benne 200 est constituée sur la Fig. 2 d'une paroi frontale 210, d'une paroi dorsale 220, réunies, d'une part, par l'intermédiaire d'une paroi de fond 230 et, d'autre part, par l'intermédiaire de deux parois latérales 240, et dont une seule est visible sur cette vue en coupe. La paroi de fond 230 présente une portion d'arc de cercle qui se raccorde de part et d'autre avec la paroi frontale et la paroi dorsale. Les bords libres des deux parois latérales 240 présentent une géométrie convexe pour accroître la capacité de la benne.

Un dispositif de fixation 250, comprenant des flasques, est fixé à l'arrière du godet pour permettre l'attelage de celui-ci sur un engin.

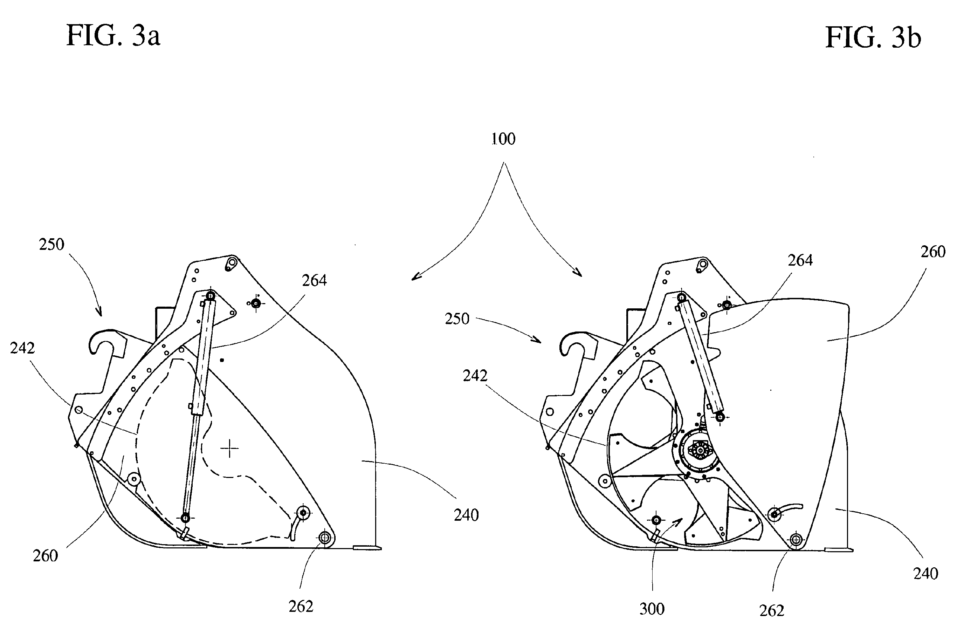

Sur les Figs. 3, au moins l'une des parois latérales est pourvue d'une trappe de déchargement 260 mobile entre une position de fermeture d'une ouverture 242 réalisée dans ladite paroi et une position de dégagement de cette ouverture. Sur la Fig. 3a, la trappe 260 est tournée dans sa position de fermeture alors que, sur la Fig. 3b, elle est tournée vers une position d'ouverture.

Sur ces Figs. 3, la trappe est montée à rotation contre la paroi latérale correspondante autour d'une articulation 262. Elle peut être déplacée entre ses deux positions extrêmes, par l'intermédiaire d'un moyen de manoeuvre 264, constitué sur ces Figs., d'un vérin hydraulique susceptible d'être alimenté par le circuit hydraulique de l'engin.

Le godet de l'invention est pourvu d'un système capable, d'une part, de mélanger de manière efficace des matières contenues dans le godet et, d'autre part, de distribuer de manière régulière et rapide, le mélange obtenu, au travers d'une paroi latérale. Ces deux fonctions de mélange et de distribution peuvent être mises en oeuvre indépendamment. On peut ainsi mélanger des céréales et les vidanger par basculement du godet. On peut encore distribuer une seule matière au travers d'une ouverture latérale du godet.

Ce système comprend un organe de mélange et/ou de distribution, d'une conception particulière et un moyen pour faire fonctionner cet organe suivant un mode de fonctionnement particulier.

Sur la Fig. l, l'organe 300 de mélange et de distribution se compose d'un arbre 310 monté à rotation entre les deux parois latérales 240a et 240b du godet, parallèlement à sa paroi de fond 230, et autour duquel est montée une pluralité de pales 320.

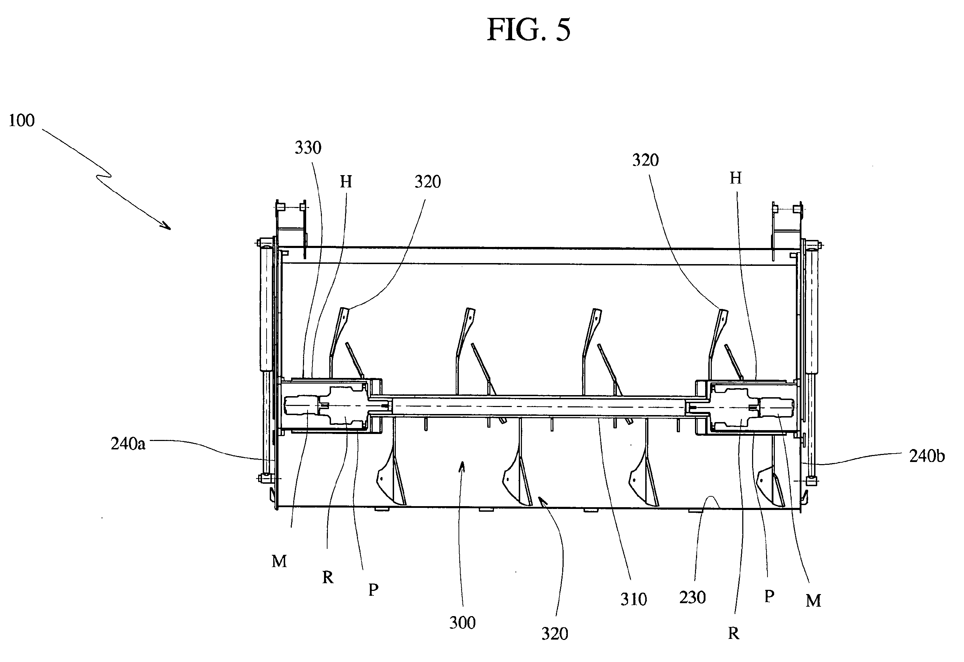

Sur la Fig. 5, l'arbre 310 est entraîné à rotation par l'intermédiaire d'un moyen d'entraînement comprenant de préférence, deux moteurs M placés respectivement au niveau des deux extrémités de l'arbre. Ces moteurs sont avantageusement du type hydraulique, susceptibles d'être alimentés par le circuit hydraulique de l'engin porteur. Chaque moteur M est accouplé à un réducteur de vitesse R pour accroître le couple de travail de l'organe 300 et adapter la vitesse de rotation de l'arbre à celle dudit moteur.

Chaque moteur est du type à sens de rotation réversible pour, d'une part, rendre le déversement possible de la matière d'un côté ou de l'autre du godet et pour accroître l'efficacité du brassage de la matière dans le godet, comme cela est expliqué plus en détail ci-après.

Chaque moteur M et son réducteur R sont logés et fixés à l'intérieur d'un pot P solidaire d'une paroi latérale 240, depuis son côté intérieur, de sorte que l'arbre du réducteur puisse sortir au travers de la paroi de fond du pot pour entraîner une extrémité de l'arbre. L'arbre est de préférence creux, pour alléger sa structure. Cette extrémité de l'arbre se prolonge en direction de la paroi latérale par un manchon H qui coiffe le pot, sans le toucher, pour recevoir au moins une pale pour que celles-ci puissent travailler sur toute la largeur interne de la benne.

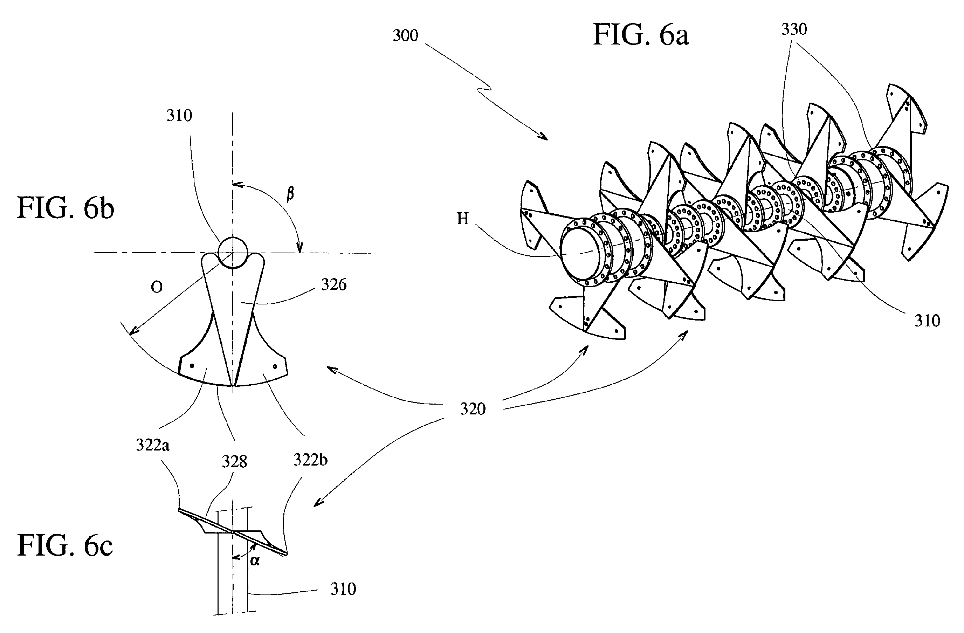

Des collerettes 330, visibles uniquement sur la Fig. 6a, sont solidarisées à intervalles réguliers autour de l'arbre 310 et des manchons H pout permettre la fixation des pales 320. Cependant, ces pales sont de préférence soudées directement sur l'arbre 310.

Sur la Fig. 6b, chaque pale 320 est constituée d'une paire d'ailes 322a, 322b attenantes de part et d'autre d'une âme centrale 326 solidaire de l'arbre.

L'âme centrale 326 présente, en vue de face, une structure de plaque triangulaire dont la largeur s'amenuise en direction de la périphérie de la pale pour recevoir de chaque côté de sa partie terminale en pointe, la paire d'ailes 322a et 322b. L'âme centrale est fixée sur l'arbre, de préférence par soudage.

Chaque aile 322 présente en vue de face, une géométrie triangulaire dont la bordure périphérique 328 est délimitée par un rayon O centré sur l'arbre 310. Une échancrure creuse le bord latéral libre pour faciliter le reflux de la matière entre les pales comme cela est expliqué ci-après, alors que son autre bord latéral est fixé sur l'âme centrale et de préférence bord à bord, par soudage. Dans un mode de fabrication plus économique, les deux ailes sont monobloc et rapportées sur l'âme centrale.

En fonctionnement, la bordure périphérique 328 des pales circule à faible distance de la paroi de fond de la benne, comme cela apparaît précisément sur la Fig. 2, pour limiter le coincement de la matière entre les pales et la benne. Les bordures périphériques des pales forment des portions d'hélicoïdes. Leur longueur cumulée est plus réduite qu'un hélicoïde, ce qui limite le frottement des pales contre la paroi de fond de la benne et ce qui limite par conséquent la puissance nécessaire à l'entraînement de l'organe de mélange et de distribution de la matière.

Dans la vue de détail de la structure d'une pale visible sur la Fig. 6c, la bordure périphérique 328 des ailes 322 forme avec l'axe de l'arbre 310 un angle a différent de 90° définissant ainsi un pas de fonctionnement à la pale, si bien que, à l'usage, les ailes 322 déplacent, pendant la rotation de l'organe 300, la matière dans la benne. Dans un mode de réalisation intéressant en termes d'efficacité de brassage et de distribution, la valeur de cet angle est comprise entre 25° et 30°.

On remarquera également sur cette Fig. 6c que la pale 320 présente une structure symétrique par rapport à un plan sécant à l'arbre 310 pour que son fonctionnement soit identique dans l'un ou l'autre de ses deux sens de rotation.

Sur la Fig. 6a, les pales 320 sont solidarisées successivement sur l'arbre 310. La pale suivante est décalée de la précédente d'un angle suffisant pour permettre à la matière de refluer entre les échancrures des pales, pendant leur rotation, et lorsque les trappes sont fermées pour brasser la matière. Dans un mode avantageux de réalisation, cet angle, noté ß sur la Fig. 6b, vaut 90 °.

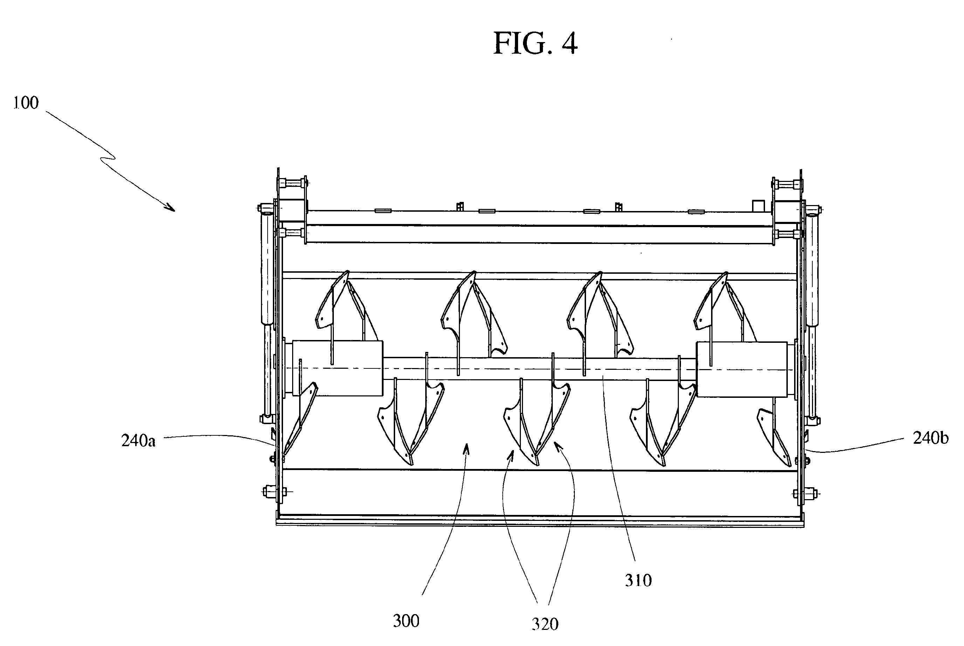

On remarquera sur la Fig. 4, que les ailes de deux pales voisines se chevauchent lorsque l'on regarde latéralement l'organe 300, pour améliorer l'efficacité de la distribution de la matière.

Sur la Fig. 2, le diamètre des pales 320 est relativement important au regard de la profondeur de la benne 200 pour que l'organe 300 puisse délivrer un débit de distribution élevé. La régularité de la distribution provient en partie de la quantité de pales rapportée au mètre de largeur de la benne.

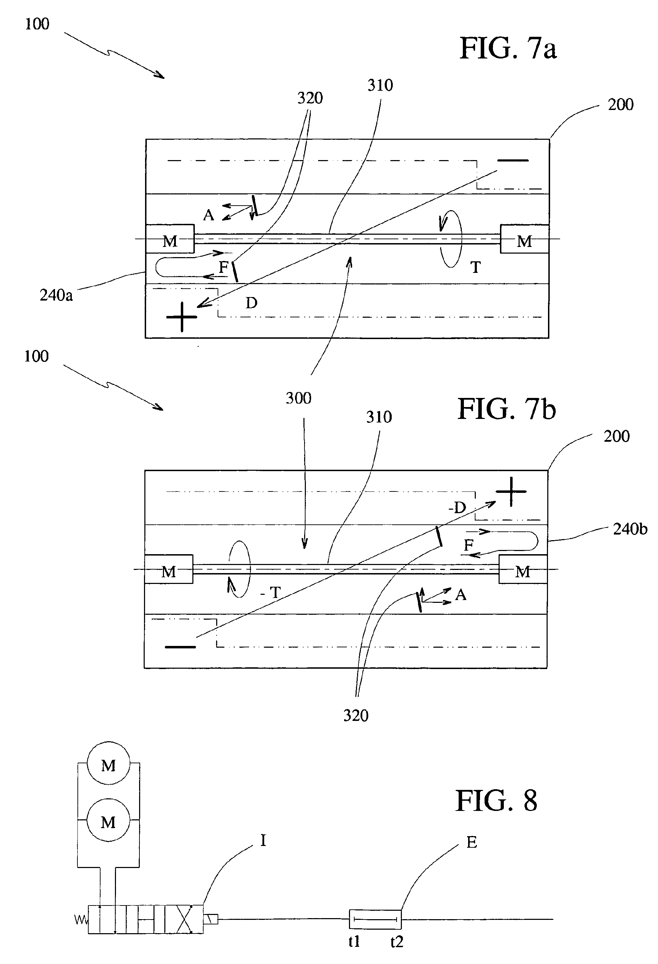

On se référera à la Fig. 7a pour illustrer le fonctionnement du godet de l'invention. Pendant la rotation de l'arbre 310, symbolisée par la flèche T sous l'effet de son entraînement par les moteurs M, les pales 320 déplacent la matière en direction de l'une, 240a, des parois latérales. La matière reflue vers l'intérieur, entre les pales 320, à la périphérie de l'arbre 310. Ce mouvement de reflux est indiqué par la flèche F et l'action d'une des pales est montrée par les flèches A. En surface, une dépression se creuse dans la matière au niveau d'une encoignure et le long d'un bord longitudinal du godet, matérialisée dans une zone délimitée en traits mixtes interrompus et par la lettre « - », alors que, à l'inverse, de la matière reflue en surface dans l'encoignure et le bord opposés, matérialisée par la zone portant la lettre « + ». La matière se déplace ainsi suivant la direction D. La matière bordant la dépression tombe dans celle-ci et se mélange. La matière est également mélangée pendant son reflux contre une paroi latérale. Ce mouvement est maintenu pendant une durée définie et relativement courte, puis le mouvement de l'arbre 310 est inversé et l'on se retrouve dans une situation visible sur la Fig. 7b. La matière se déplace suivant la direction - D. Ainsi, en inversant régulièrement le sens de rotation de l'arbre 310, on provoque rapidement son mélange, sans dénaturer sa structure, c'est-à-dire en évitant de trop compresser la matière.

A ce stade, l'utilisateur peut incorporer au moins une autre matière avec la première pour les mélanger. Les matières peuvent encore être chargées successivement puis mélangées ensuite.

La mise en oeuvre cyclique du changement de sens de rotation des moteurs est réalisée par l'intermédiaire d'un temporisateur.

Sur la Fig. 8, le godet comporte un distributeur hydraulique 1 de commande du fonctionnement des moteurs M. La commande de ce distributeur est réalisée par un temporisateur E à commande électrique alimenté par le circuit électrique de l'engin, depuis une manette de commande. Le distributeur est, sur cette Fig. 8, de type 4/3 à pilote électrique et à rappel par ressort. Les deux moteurs sont alimentés en parallèle depuis ce distributeur. Ce distributeur est encore de préférence de type à centre ouvert pour réduire les à-coups de fonctionnement pendant la phase d'inversion de sens de rotation des moteurs.

Les deux temps t1 et t2 de déclenchement du temporisateur peuvent être modifiés pour adapter le fonctionnement du godet au mélange de différentes sortes de matières. De préférence, la durée du temps t1 égale la durée du temps t2.

Cependant, le demandeur a constaté que, dès lors que l'arbre tourne d'au moins un tour complet, des résultats intéressants sont obtenus en ce qui concerne l'homogénéité du mélange des matières et la rapidité de mélange. Pour des matières fragiles, telles que des matières fibreuses, la durée totale du cycle, c'est-à-dire la durée pendant laquelle les moteurs M fonctionnent pour mélanger la matière, peut être contrôlée, par exemple en coupant l'alimentation hydraulique des moteurs.

On peut encore utiliser un capteur de pression placé dans le circuit d'alimentation des moteurs. Lorsque cette pression atteint un certain seuil, c'est-à-dire lorsque la compression de la matière atteint un certain niveau, le signal fourni par ce capteur est utilisé par un composant électro-hydraulique tel qu'un pressostat ou par une unité de commande pour inverser le sens de rotation des moteurs.

Lorsque la matière est convenablement mélangée, l'utilisateur choisit l'emplacement de vidange du godet, par exemple en déplaçant le godet au-dessus d'auges dans une stabulation. L'utilisateur manoeuvre depuis la cabine de l'engin, une manette qui commande le fonctionnement du vérin d'ouverture d'une trappe de déchargement et le fonctionnement des moteurs de manière à faire sortir la matière au travers d'une ouverture de la paroi latérale correspondante du godet. Pendant la phase de distribution, les moteurs entraînent l'organe rotatif dans un seul et même sens de rotation. Le fonctionnement de la temporisation n'est plus opérationnel.

Une vitesse de rotation de 30 tours par minute pour des pales d'un rayon de 50 cm procure également des résultats intéressants en termes d'efficacité de mélange et de vitesse de distribution.

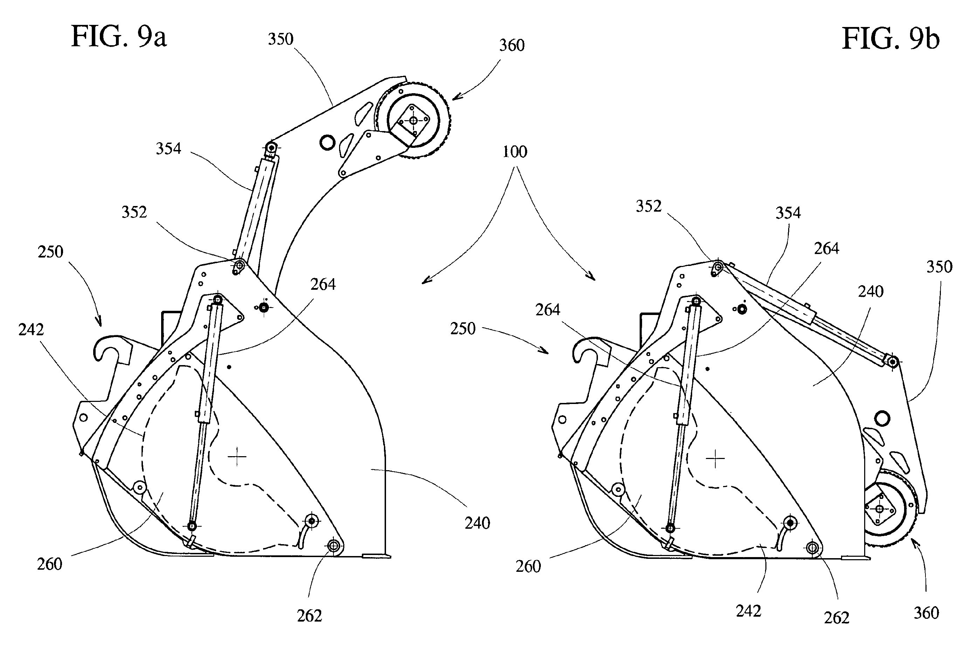

Dans une variante de réalisation présentée aux Figs. 9a et 9b, le godet est pourvu d'un bras de manoeuvre 350 d'un rotor 360, monté de manière articulée, de telle sorte que le rotor puisse prélever en se déplaçant de la matière sur le front d'un silo.

Le bras de manoeuvre 350 est constitué de deux éléments disposés l'un en vis-à-vis de l'autre, chaque élément étant fixé à une extrémité, et par l'intermédiaire d'une articulation 352, sur une paroi latérale.

Le bras de manoeuvre 350 est mû par l'intermédiaire d'au moins un vérin hydraulique 354, du type à double effet, entre une position de dégagement visible sur la Fig. 9a où le bras est disposé approximativement dans le prolongement de la paroi dorsale du godet et une position de rabattement, visible sur la Fig. 9b, où le rotor 360 est disposé à proximité de sa paroi frontale.

Le godet de l'invention est capable de mélanger de manière homogène des matières sans les dénaturer. L'inversion automatique du sens de rotation de son organe mélangeur évite de compresser inutilement la matière qui finit, dans ces conditions, par être dénaturée. Pendant le mélange, il évite en effet la compression de la matière susceptible de transformer un aliment fragile en bouillie, qui ne sera pas apprécié des animaux.

Il parvient également à vidanger son contenu rapidement et de manière régulière grâce à la structure de son organe de distribution.

Il convient pour mélanger et/ou distribuer tous types de matières granuleuses et/ou fibreuses ou encore des matières pâteuses.

## Revendications

1. Godet (100) destiné à mélanger des matières, du type comprenant une benne (200) délimitée par une paroi de fond (230), un organe (300) monté à rotation le long de sa paroi de fond pour mélanger la matière dans la benne (200), **caractérisé en ce qu'**il est pourvu d'un moyen de commande apte à inverser, de manière périodique et automatique, le sens de rotation dudit organe.

2. Godet (100) selon la revendication 1, **caractérisé en ce que** le moyen de commande comprend un temporisateur (E).

3. Godet (100) selon la revendication 1 ou 2, **caractérisé en ce que** l'organe rotatif (300) comprend un arbre (310) autour duquel sont montées des pales (320).

4. Godet (100) selon la revendication 3, **caractérisé en ce que** chaque pale (320) comprend une paire d'ailes (322a, 322b) attenantes à une âme centrale (326) solidaire de l'arbre (310).

5. Godet (100) selon l'une quelconque des revendications précédentes, **caractérisé en ce que** la benne (200) comporte des parois latérales (240) et dont au moins une est traversée par une ouverture (242) et **en ce qu'**une trappe de déchargement (260) est montée de manière mobile contre cette paroi entre une position de fermeture de l'ouverture (242) et une position de dégagement de ladite ouverture.

6. Godet (100) selon l'une quelconque des revendications 3 à 5, **caractérisé en ce que** l'arbre (310) est susceptible d'être entraîné à rotation au niveau d'au moins l'une de ses extrémités par l'intermédiaire d'un moteur (M).

7. Godet (100) selon la revendication 6, **caractérisé en ce que** ledit ou chaque moteur (M) est fixé à l'intérieur d'un pot (P) solidaire d'une paroi latérale (240).

8. Godet (100) selon la revendication 6 ou 7, **caractérisé en ce qu'**au moins une extrémité de l'arbre est prolongée en direction d'une paroi latérale (240) correspondante par l'intermédiaire d'un manchon (H) qui coiffe le pot (P), sans le toucher, au moins une pale (320) étant fixée autour dudit manchon pour que celles-ci puissent travailler sur toute la largeur interne de la benne.

9. Godet (100) selon les revendications 6, 7 et 8, **caractérisé en ce que** le moyen de commande comprend un capteur de pression placé dans le circuit d'alimentation dudit ou de chaque moteur.

10. Procédé de mélange de matières dans une benne (200) pourvue d'un organe rotatif (300) de mélange situé le long de sa paroi de fond, **caractérisé en ce qu'**il consiste, pendant une phase de mélange, à inverser périodiquement, et de manière automatique, le sens de rotation dudit organe de manière à brasser les matières sans les dénaturer.

11. Procédé selon la revendication 10, **caractérisé en ce qu'**il consiste à faire tourner l'organe rotatif d'au moins un tour complet avant d'inverser son sens de rotation.

12. Procédé selon la revendication 10 ou 11, **caractérisé en ce qu'**il consiste, pendant une phase de distribution du mélange, à faire tourner l'organe rotatif dans un seul sens particulier.

## Claims

1. Bucket (100) intended to mix materials, of the type including a bin (200) defined by a base wall (230), a unit (300) rotatably mounted along its base wall to mix the material in the bin (200), **characterised in that** it is fitted with a means of control capable of reversing, periodically and automatically, the direction of rotation of said unit.

2. Bucket (100) according to claim 1, **characterised in that** the means of control includes a timer (E).

3. Bucket (100) according to claim 1 or 2, **characterised in that** the rotary unit (300) includes a shaft (310) around which blades are mounted (320).

4. Bucket (100) according to claim 3, **characterised in that** each blade (320) includes a pair of wings (322a, 322b) adjoining a central core (326) integrated with the shaft (310).

5. Bucket (100) according to any one of the preceding claims, **characterised in that** the bin (200) comprises side walls (240), at least one of which is pierced by an aperture (242) and **in that** an unloading flap (260) is mounted so as to move against this wall between an aperture closed position (242) and a release position for said aperture.

6. Bucket (100) according to any one of claims 3 to 5, **characterised in that** the shaft (310) is capable of being driven in rotation on at least one of its ends by means of a motor (M).

7. Bucket (100) according to claim 6, **characterised in that** said or each motor (M) is fixed inside a pot (P) integrated with a side wall (240).

8. Bucket (100) according to claim 6 or 7, **characterised in that** at least one end of the shaft is extended in the direction of a corresponding side wall (240) by means of a sleeve (H) which caps the pot (P), without touching it, at least one blade (320) being fixed around said sleeve so that they can work over the entire internal width of the bin.

9. Bucket (100) according to claims 6, 7 and 8, **characterised in that** the means of control includes a pressure sensor placed in the power supply circuit of said or each motor.

10. Method of mixing materials in a bin (200) fitted with a rotary mixing unit (300) positioned along its base wall, **characterised in that** it consists, during a mixing phase, in periodically and automatically reversing the direction of rotation of said unit so as to chum the materials without adulterating them.

11. Method according to claim 10, **characterised in that** it consists in turning the rotary unit through at least one complete turn before reversing its direction of rotation.

12. Method according to claim 10 or 11, **characterised in that** it consists, during a mixture distribution phase, in turning the rotary unit in one particular sole direction.

## Patentansprüche

1. Zum Mischen von Materialien bestimmte Schaufel (100) der Art, die einen Kübel (200) enthält, der von einer Rückwand (230) begrenzt ist, wobei ein Organ (300) drehbar entlang ihrer Rückwand montiert ist, um das Material im Kübel (200) zu mischen, **dadurch gekennzeichnet, dass** sie mit einer Steuereinrichtung versehen ist, die die Drehrichtung des Organs periodisch und automatisch umkehren kann.

2. Schaufel (100) nach Anspruch 1, **dadurch gekennzeichnet, dass** die Steuereinrichtung ein Verzögerungsglied (E) enthält.

3. Schaufel (100) nach Anspruch 1 oder 2, **dadurch gekennzeichnet, dass** das drehbare Organ (300) eine Welle (310) enthält, um die herum Blätter (320) montiert sind.

4. Schaufel (100) nach Anspruch 3, **dadurch gekennzeichnet, dass** jedes Blatt (320) ein Paar Flügel (322a, 322b) aufweist, die an einen zentralen Kern (326) angrenzen, der fest mit der Welle (310) verbunden ist.

5. Schaufel (100) nach einem der vorhergehenden Ansprüche, **dadurch gekennzeichnet, dass** der Kübel (200) Seitenwände (240) enthält, von denen mindestens eine von einer Öffnung (242) durchquert wird, und dass eine Entladeklappe (260) zwischen einer Schließstellung der Öffnung (242) und einer Freigabestellung der Öffnung beweglich an dieser Wand montiert ist.

6. Schaufel (100) nach einem der Ansprüche 3 bis 5, **dadurch gekennzeichnet, dass** die Welle (310) mit Hilfe eines Motors (M) im Bereich mindestens eines ihrer Enden in Drehung versetzt werden kann.

7. Schaufel (100) nach Anspruch 6, **dadurch gekennzeichnet, dass** der oder jeder Motor (M) innerhalb eines Topfs (P) befestigt ist, der fest mit einer Seitenwand (240) verbunden ist.

8. Schaufel (100) nach Anspruch 6 oder 7, **dadurch gekennzeichnet, dass** mindestens ein Ende der Welle in Richtung einer entsprechenden Seitenwand (240) mittels einer Muffe (H) verlängert ist, die den Topf (P) bedeckt, ohne ihn zu berühren, wobei mindestens ein Blatt (320) um die Muffe herum befestigt ist, damit diese über die ganze innere Breite des Kübels arbeiten können.

9. Schaufel (100) nach den Ansprüchen 6, 7 und 8, **dadurch gekennzeichnet, dass** die Steuereinrichtung einen Drucksensor enthält, der im Versorgungsschaltkreis des oder jedes Motors angeordnet ist.

10. Verfahren zum Mischen von Materialien in einem Kübel (200), der mit einem drehbaren Mischorgan (300) versehen ist, das entlang seiner Rückwand angeordnet ist, **dadurch gekennzeichnet, dass** es darin besteht, während einer Mischphase die Drehrichtung des Organs periodisch und automatisch umzukehren, um die Materialien umzurühren, ohne sie zu denaturieren.

11. Verfahren nach Anspruch 10, **dadurch gekennzeichnet, dass** es darin besteht, das drehbare Organ mindestens um eine ganze Umdrehung zu drehen, ehe seine Drehrichtung umgekehrt wird.

12. Verfahren nach Anspruch 10 oder 11, **dadurch gekennzeichnet, dass** es darin besteht, während einer Ausgabephase der Mischung das drehbare Organ in einer einzigen bestimmten Richtung zu drehen.
